Europäisches Patentamt

European Patent Office

Office européen des brevets

(11) Publication number: **0 250 882**
A1

# (12) EUROPEAN PATENT APPLICATION

(21) Application number: 87107800.2

(22) Date of filing: 29.05.87

(51) Int. Cl.4: **F16D 1/08** , F16C 35/063

(30) Priority: 24.06.86 SE 8602786

(43) Date of publication of application:
07.01.88 Bulletin 88/01

(84) Designated Contracting States:
DE FR GB IT

(71) Applicant: SKF Nova AB

S-415 50 Göteborg(SE)

(72) Inventor: Hallerbäck, Stig
Blodboksgatan 12
S-421 74 Västra Frölunda(SE)

(74) Representative: Kristiansen, Alf P. et al
Aktiebolaget SKF Patent Department
S-415 50 Göteborg(SE)

(54) **A bushing, a hub, a bearing seat or the like.**

(57) A cast bushing, a hub, a bearing seat or the like
for mounting on a cylindrical shaft (1) is reinforced
by means of a helix (2), e.g. made from steel, and is
characterized in that it is prevented from rotation
relative to the shaft (1) by the casting material (3)
radially inside the helix (2) having axially extending
depressions or ridges (5,6,7) in the cylindrical sur-
face for co-operation with corresponding ridges or
depressions in the surface of the shaft (1).

Fig 1

EP 0 250 882 A1

## A BUSHING, A HUB, A BEARING SEAT OR THE LIKE

The present invention refers to a bushing, a hub, a bearing seat or the like intended to be fitted to a cylindrical shaft and consisting of a casting material, such as plastic, and being reinforced by means of a helix of a tenacious material, such as steel.

Devices of this type are earlier known e.g. from Swedish Patent Specifications 7405905-6, 8402412-4, 8404438-7 and US Patent Specification 4,565,493. These patents describe bearing seats, hubs and the like, and they all have in common that they incorporate a body of casting with a cylindric inner cross section, which body of casting is intended to be fitted to a cylindrical shaft, preferably being of steel and which is reinforced with a prestressed helix of steel. The purpose of this steel helix primarily is to urge the material of the body of casting, which is often a plastic material, to follow the coefficient of thermal expansion of the steel at temperature variations. A bearing bushing or a hub made in this manner therefore will not come loose from the shaft due to temperature variations.

Hubs, bushings, etcetera, of the type mentioned above however also can be exerted to forces trying to rotate them on the shaft. A common method to prevent such rotation at conventional hubs or bushings, made e.g. from cast iron or steel, is to provide a keygroove in the shaft, the bushing or the hub, and then to drive in a key preventing rotation. At bushings etcetera made from plastic material or from another correspondingly brittle casting material it is not possible to provide such key joints, as the plastic material or the brittle material lacks sufficient tenacity or strenght therefore, but should be crumbled in the vicinity of the key joint.

The difficulty at the above mentioned devices has been overcome by the present invention, and it has been provided a bushing, a hub, a bearing seat or the like intended to be fitted to a cylindrical shaft and consisting of a casting material, such as plastic, and reinforced by means of a helix of a tenacious material, such as steel, adjacent the inner cylindric surface of the bushing, hub or bearing seat, and which is characterized thereby that the bushing, hub or bearing seat is prevented from rotation relative to the shaft in that the casting material radially inside the helix has been designed with axially extending interruptions shaped as depressions or ridges in the cylindric surface, which interruptions are intended to cooperate with corresponding interruptions in the cylindric surface of the shaft.

The interruption in the cylindrical surface according to the invention may consist of one or more axial recesses or it may consist of one or more plane axial surfaces. According to the invention this interruption can also be made as one or more axial projections, which can be reinforced with axially extending metallic insertions.

The invention hereinafter will be further described with reference to the accompanying drawings, which in cross-section show four different embodiments of the present invention.

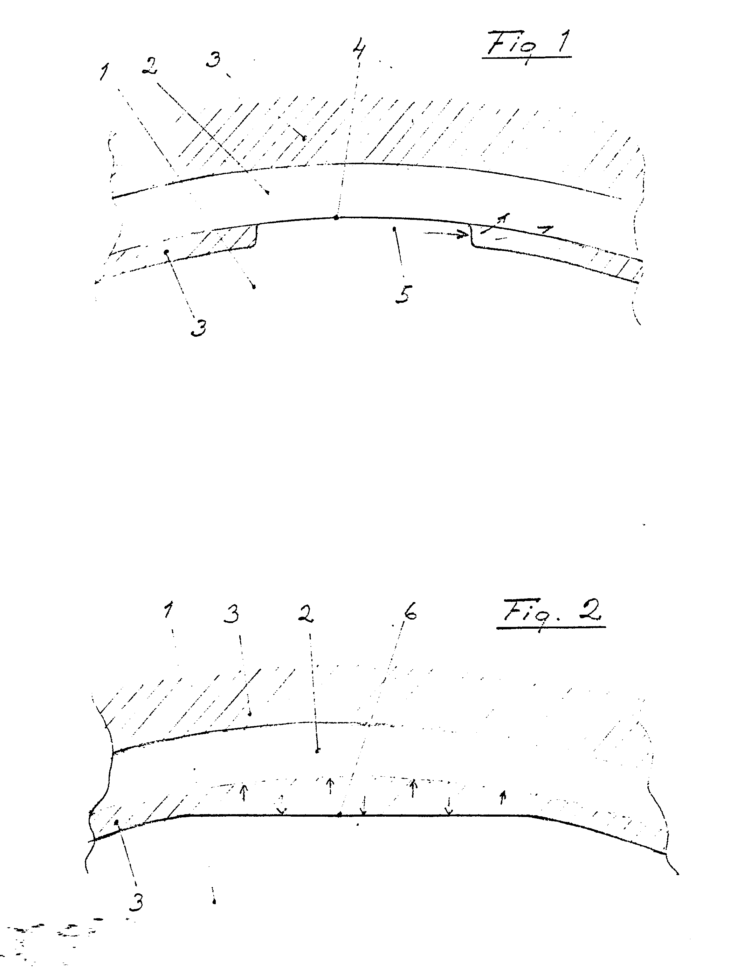

In Figure 1 is shown a part of a shaft 1 about which is arranged a bushing incorporating a helix 2 embedded in plastic material 3. Such as shown the plastic material 3 is present outside as well as inside the helix 2. The plastic material has been excluded at a sector 4 of the radially inner side of the helix. In this sector 4 has been inserted a key 5, which locks the bushing to the shaft 1. The thickness of the plastic layer inside the helix should not exceed 0,5 mm. This depends on the fact that the plastic layer may be too brittle if it is too thick. As can be seen from the figure the edge of the plastic layer facing the key 5 should be chamfered, thus that an even distribution of the side forces is obtained, such as intimated with the inserted arrows.

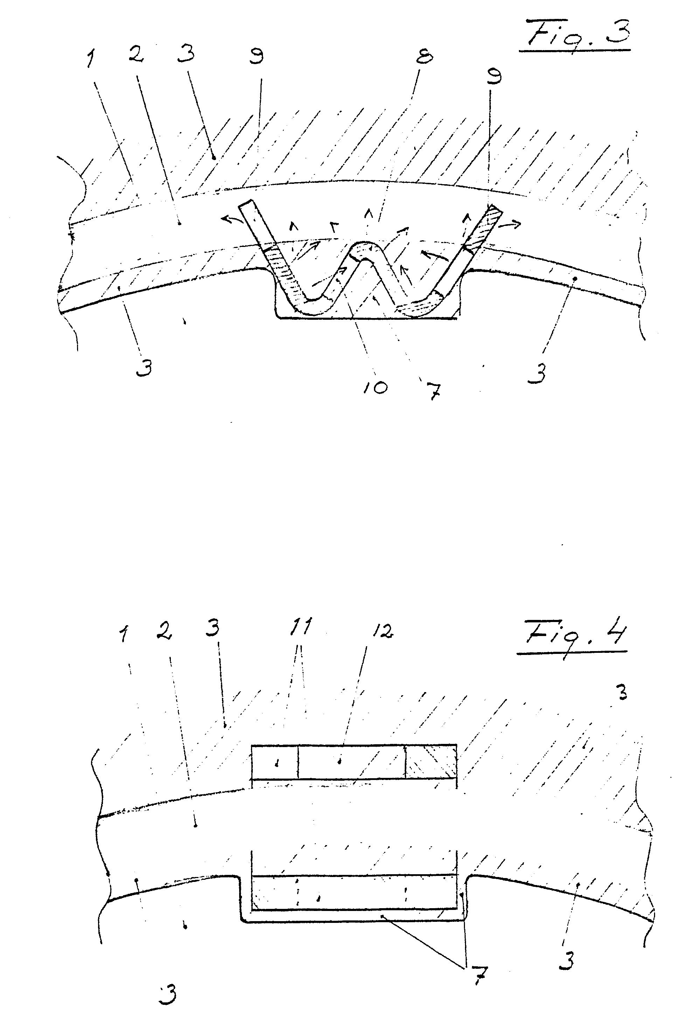

Figure 2 shows another embodiment of the invention. In this embodiment a portion of the inner surface of the plastic material 3 has been given a planar form 6. It is possible to have one or more such plane surfaces 6 depending on the size of the torsional forces expected upon the bushing relative to the shaft.

In Figure 3 is shown a further embodiment of the invention, in which a projection 7 has been provided inwards towards the centre. A corresponding recess then must be made in the shaft 1. As this projection 7 contains much plastic material should it be reinforced and a perforated metal rail 8, which has been bent in a proper manner, therefore has been embedded. Teeth 9 on this bent rail 8 project in between the turns of the helix 2. The rail 8 is provided with a number of holes 10 to allow the plastic material easily to flow into the mould and to allow it to adhere to the rail 8 with a safe grip.

Figure 4 finally shows a further embodiment of the invention resembling to that described in Figure 3. Instead of a metal rail there has been inserted a clamp 11 over the turns of the helix 2 from one side and this clamp has been embedded in the plastic material. The clamp is provided with a number of holes 12 in a similar manner and for the same purpose as the metal rail in Figure 3.

The devices according to the invention give a safe and lenient joint with the shaft. The pressure of the shaft against the inner plane of the bushing gives a similar increase of the clamping pressure of the bushing around the entire shaft, whereby local strain variations are prevented.

The invention is not limited to the embodiments shown but can be modified in different manners within the scope of the claims.

## Claims

1. A bushing, a hub, a bearing seat or the like intended to be fitted to a cylindrical shaft (1) and consisting of a casting material (3), such as plastic, and being reinforced by a helix (2) of a tenacious material, such as steel, adjacent the inner cylindric surface of the bushing, hub or bearing seat, **characterized therein**, that the bushing, hub or bearing seat is prevented from rotation relative to the shaft (1) in that the casting material (3) radially inside the helix (2) has been designed with axially extending interruptions shaped as depressions or ridges (5,6,7) in the cylindric surface, which interruptions are intended to cooperate with corresponding interruptions in the cylindric surface of the shaft (1).

2. A bushing, a hub, a bearing seat or the like as claimed in claim 1, **characterized therein**, that one or more axial recesses (4) are provided in the cylindric surface.

3. A bushing, a hub, a bearing seat or the like as claimed in claim 1, **characterized therein**, that one or more plane axial surfaces (6) are provided in the cylindric surface.

4. A bushing, a hub, a bearing seat or the like as claimed in claim 1, **characterized therein**, that one or more axial projections (7) are provided in the cylindric surface.

5. A bushing, a hub, a bearing seat or the like as claimed in claim 1, **characterized therein** , that the projections (7) are reinforced by axially extending metallic insertions (8,11).

*Fig 1*

*Fig. 2*

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 160 935 (S.K.F. AB) * Whole document * & SE-B-437 413 (Cat. D) | 1,2,4 | F 16 D 1/08 F 16 C 35/063 |
| Y | | 3,5 | |
| Y | US-A-3 994 608 (SWIDERSKI) * Whole document * | 3 | |
| A | | 1 | |
| Y | GB-A-2 011 582 (SIEMENS AG) * Whole document * | 5 | |
| A | | 1,2,4 | TECHNICAL FIELDS SEARCHED (Int. Cl.4) |
| A | US-A-3 709 531 (BEEHLER) * Whole document * | 1,2 | F 16 D 1/00 F 16 C |
| A | US-A-2 882 077 (MARSH) * Whole document * | 1,3 | |
| A | GB-A-1 180 646 (GELL) | | |
| A | DE-A-1 600 208 (WILLIAMS RESEARCH) | | |

The present search report has been drawn up for all claims

| Place of search | Date of completion of the search | Examiner |
|---|---|---|
| THE HAGUE | 01-10-1987 | BALDWIN D.R. |